# EUROPEAN PATENT SPECIFICATION

(11) **EP 2 724 845 B1**
(45) Date of publication and mention of the grant of the patent: **31.08.2016**
(21) Application number: 12189609.6
(22) Date of filing: 23.10.2012
(51) Int. Cl.: B29C 70/54, B29C 33/44

(54) **Method and device for conditioning an envelope of a deformable element**
Verfahren und Vorrichtung zum Vorbereiten eines Umschlags eines verformbaren Elements
Procédé et dispositif de conditionnement d'une enveloppe d'un élément déformable

(43) Date of publication of application: 30.04.2014
(73) Proprietor: Thöni Industriebetriebe GmbH, 6410 Telfs (AT)
(72) Inventor: Schennach, Oliver, 6414 Mieming (AT); Ludwig, Matthias, 6135 Stans (AT); Köll, Thomas, 6410 Telfs (AT)
(74) Representative: Dilg, Haeusler, Schindelmann Patentanwaltsgesellschaft mbH

(56) References cited:
- WO-A2-2011/044903
- GB-A- 1 253 198
- US-A- 4 092 769
- US-A- 5 809 822

## Description

### FIELD OF THE INVENTION

The present invention relates to the field of building structural elements from a deformable element. In particular, the present invention relates to a method of conditioning an envelope of a deformable element and a respective conditioning device.

### BACKGROUND

WO 2010/129975 A2 relates to a method for producing a structural element comprising a fibre-rein-forced plastic. According to the invention, a flexible hose is provided with a tubular woven fabric and shaped into the desired form. A plastic that is preferably in liquid form is applied to the tubular woven fabric and is subsequently cured. The woven fabric may be provided with an additional tube envelope which may be a heat-shrinkable sleeve. After curing the plastic the additional envelope is cut open and removed.

WO 2011/044903 A2 relates to a computer implemented method for creating a customized CAD model of a casting mold by means of rapid prototyping, such as 3-D printing. Means are provided for defining and positioning at least one surface area on the casting mold CAD model by means of lines, splines and/or planes, said at least one surface area adapted to act as breakage point(s) when extracting the device subsequent to the casting process.

GB 1 253 198 relates to an improvement of cut off tools for cylindrical objects, such as pipe cutters, wherein the cutting plane is perpendicular to a longitudinal direction of the pipe. Continued rotation of a cutter slide feed screw causes a bit to remove material from the pipe as a shaving until the pipe is completely severed. The cut off type tool bit may be replaced by a grooving tool when it is desired to form a groove near the end of the pipe or a tapering tool if the end of the pipe is to be tapered.

US 4,092,769 relates to an apparatus for encapsulating a bundle of fibers which are aligned generally parallel to each other axially within an elastomeric tube having an unexpanded diameter smaller than the normal diameter two of the bundle. This is achieved by pressurizing the tube, thereby expanding the tube radially to a diameter that approximates or is larger than the uncompressed diameter of the fiber bundle when the fiber bundle is drawn up into the tube. If the fiber bundle reaches its end position, the tube is vented slowly to atmospheric pressure thereby allowing tube to contact about fiber bundle so that the latter is tightly encapsulated within the former.

US 5,809,822 A relates to a method for producing a metallic hollow body having a cylindrical shell which is provided on its outer surface with at least one predetermined breaking line. Cylindrical hollow bodies of this type can be metallic packing bodies as also as so-called splittable cannula which are used to introduce medical devices, such as catheters, endoscopes, etc. into the human or animal body. Rolling devices are arranged, before or behind a drawing tool, for rolling-in the desired predetermined breaking lines.

In view of the above described situation, there exists a need for an improved technique that facilitates production of a structural element from a deformable element which in an intermediate production stage comprises an envelope thereon.

### SUMMARY

This need is met by the subject-matter according to the independent claims 1, 6 and 12. Advantageous embodiments of the herein disclosed subject-matter are described by the dependent claims.

According to a first aspect of the invention there is provided a method according to claim 1 of conditioning an envelope of a deformable element, the method comprising generating a predetermined breaking line in an envelope, wherein generating the predetermined breaking line comprises working on the envelope up to a predetermined depth which is less than the wall thickness of the envelope.

This aspect of the herein disclosed subject-matter is based on the idea that by generating the predetermined breaking line only up to the predetermined depth which is less than the wall thickness of the envelope, the predetermined breaking line can be produced in before forming and stiffening the deformable element. Since the predetermined breaking line extends only partially through the wall thickness of the envelope, the envelope can perform its function while at the same time providing for an easy removal of the envelope from the deformable element in a later production stage. For example, the method according to the first aspect allows generating the predetermined breaking line before a stiffening medium is applied to the deformable element under use of the envelope.

According to an embodiment, the envelope is a tube, i.e. it is circumferentially closed. According to an embodiment, the envelope is made of a flexible material, e.g. of plastic or rubber. According to an embodiment, the envelope is a gastight tube.

According to the invention generating the predetermined breaking line comprises providing a tool for working on the envelope; moving the tool and the envelope relative to each other in order to provide the predetermined breaking line. For instance, the envelope may be fixed in space and the tool may be moveable. In another embodiment the tool is fixed in space and the envelope is moveable. According to a still further embodiment, both the tool and the envelope are moveable. Moveability of at least one of the tool and the envelope may allow the predetermined breaking line in the envelope to extend over a axial length which is larger than the axial dimension of the tool.

According to the invention, the method comprises coordinating an insertion movement of the deformable element into the envelope with the movement of the tool and the envelope relative to each other. For instance, according to an embodiment the relative movement of tool and envelope may be performed in simultaneously with insertion movement of the deformable element into the envelope. The insertion movement may be performed by moving the envelope and maintaining the position of the deformable element. According to another embodiment, the insertion movement is performed by moving the deformable element and maintaining the position of the envelope. According to a still further embodiment, the insertion movement is performed by moving both, the deformable element and the envelope. According to an exemplary embodiment, the deformable element is fixed in space and the tool is fixed in space while the envelope is moved past the tool and over the deformable element. Hence, in accordance with this embodiment the insertion movement and the generation of the predetermined breaking line is performed by a single move of the envelope.

According to a further embodiment, the method comprises pressurizing an internal space of the envelope during the generation of the predetermined breaking line. This may assist the generation of the predetermined breaking line and may assist the insertion movement of the deformable element into the internal space of the envelope.

According to a still further embodiment, in total two or more predetermined breaking lines may be generated in the envelope. According to an embodiment, the predetermined breaking lines may be generated equally distributed about the circumference of the envelope. For example, according to an embodiment, the predetermined breaking line is a first predetermined breaking line and the method further comprises generating a second predetermined breaking line which is diametrically opposite the first predetermined breaking line. According to another embodiment, the method further comprises generating at least one further predetermined breaking line in addition to the first predetermined breaking line. The first and the further predetermined breaking lines may be generated simultaneously e.g. by providing a respective number of tools distributed about the circumference of the envelope. However, subsequent generation of one or more predetermined breaking lines is also possible.

According to an embodiment, working the envelope up to a predetermined depth comprises cutting into the envelope up to a predetermined depth. Cutting into the envelope up to the predetermined depth has the advantage that a cutting operation is relatively easy to perform. For example, the cutting may be performed by providing the tool in the form of a blade and moving the blade relative to the envelope. However, other ways of generating a predetermined breaking line may also be used with embodiments of the herein disclosed subject matter.

According to a second aspect of the invention, a method according to claim 5 of production of a structural element from a deformable element is provided, the method comprising conditioning an envelope of the deformable element according to any embodiment disclosed herein; subsequently shaping the deformable element together with the envelope located on the deformable element. Hence, the generation of the predetermined breaking line is performed before the shaping of the deformable element. This may facilitate generation of the predetermined breaking line. For example, in an embodiment the envelope is in a straight elongated shape during generation of the (at least one) predetermined breaking line.

According to an embodiment, the deformable element comprises a plurality of cavities and the method further comprises filling the cavities with a curable medium after shaping the deformable element. Since the predetermined breaking line extends only up to the predetermined depth which is less than the wall thickness of the envelope, the envelope is still circumferentially closed at the breaking line.

According to an embodiment, the method further comprises subsequently curing the curable medium in the cavities of the deformable element, thereby reducing deformability of the deformable medium. Further, the method may comprise removing the envelope from the deformable medium after curing the curable medium by breaking the envelope along the predetermined breaking line. It should be understood that in this production stage the deformable medium is less deformable than during generation of the predetermined breaking line.

According to a third aspect of the invention a conditioning device according to claim 6 is provided, the conditioning device comprising: an envelope holder configured for holding an envelope; a tool for generating a predetermined breaking line in the envelope held by the envelope holder; a depth adjustment device configured for maintaining a predetermined depth up to which the tool works on the envelope, wherein the predetermined depth is less than a wall thickness of the envelope.

Conditioning of an envelope only up to a predetermined depth may be advantageous as described with regard to the first and second aspects of the herein disclosed subject matter. The depth adjustment device may be configured for providing a fixed predetermined depth. In such a case the envelope holder is configured for holding an envelope with a wall thickness larger than the predetermined depth. According to other embodiments, the depth adjustment device is configured so as provide an adjustable predetermined depth such that the predetermined depth may be adjusted to a particular wall thickness of the envelope or to a particular application.

According to an embodiment, the conditioning device further comprises a bias element biasing the tool against the envelope. Biasing the tool against the envelope may assist in generating predetermined breaking lines with reproducible characteristics. This may be advantageous in applications where the envelope must provide predetermined characteristics, e.g. a predetermined pressure resistance. According to an embodiment the tool is moveable in order to follow an outer shape of the envelope. In such an embodiment the predetermined bias force may ensure proper operation of the tool even for a non-flat outer shape of the envelope.

According to the invention, the conditioning device further comprises: an actuator configured for moving the tool and the envelope holder relative to each other to thereby generate the predetermined breaking line in the envelope over an axial length which is larger than the axial dimension of the tool. Elongated envelopes may be processed by the conditioning device.

According to an embodiment, the depth adjustment device further comprises a slider having a sliding surface configured for sliding over the envelope during movement of the tool and the envelope holder relative to each other. According to an embodiment the tool protrudes over the sliding surface towards the envelope by a predetermined length corresponding to the predetermined depth. In such an embodiment, the protrusion of the tool over the sliding surface determines the predetermined depth up to which the tool works on the envelope. This may be advantageous e.g. for mechanically operating tools such as blades. It should however be understood that for radiation operated tools such as lasers there may be no such protruding tool portion. However, even in this case the sliding surface may provide for a constant predetermined distance between the tool and the envelope, thereby maintaining a predetermined operating depth of the radiation.

According to an embodiment, the depth adjustment device further comprises an adjustment mechanism connecting the tool and the slider wherein a relative position between the tool and the slider is adjustable. For example, in case of a mechanically operating tool, the adjustment mechanism may be configured to adjust the predetermined length by which the tool protrudes over the sliding surface.

According to an embodiment, the tool is configured to be moveable into an operating position in which the tool is positioned for generating the predetermined breaking line; and the tool is configured to be moveable into an parking position in which the tool is retracted from the operating position. Retraction of the tool from the operating position and hence from the location where the envelope is placed during operation of the conditioning device may e.g. facilitate mounting the envelope in the envelope holder.

According to an embodiment, the conditioning device further comprises a gas outlet configured for providing pressurized gas to the internal space of the envelope during the generation of the predetermined breaking line. Providing pressurized gas to the internal space of the envelope may assist in the generation of the predetermined breaking line. Further, providing pressurized gas to the internal space of the envelope may assist an insertion movement of a deformable element into the envelope.

The gas outlet may be provided at any suitable location which allows to provide pressurized gas to the internal space of the envelope. For example, if the envelope has an open end, through which the deformable element is inserted into the internal space, and a closed end, the gas outlet may be located in the vicinity of the closed end of the envelope.

According to the invention, the actuator is further configured for performing simultaneously both the movement of the tool and the envelope holder relative to each other as well as the insertion movement of the deformable element into the envelope. For holding the deformable element a suitably configured carrier may be provided.

The carrier may be any carrier which is suitable for holding the deformable element such that the insertion movement of the carrier into the envelope can be performed. For example, the carrier may be a rod on which the deformable element is mounted. The carrier may extend through the deformable element. For example, in an embodiment the deformable element is tube-shaped. In such an embodiment, the carrier may be located in the tube shaped deformable element may. The carrier may extending partially or fully through the deformable element. In other embodiments, the carrier may be attached to a front face of the deformable element. However, other configurations of the carrier and the attachment of the deformable element to the carrier are also possible.

The insertion movement can be performed by moving the carrier with regard to the envelope holder, by moving the envelope holder with regard to the carrier or by moving both, the envelope holder and the carrier. Accordingly, one of the carrier and the envelope holder may be spatially fixed and the other may be movable in order to provide for the insertion movement of the deformable element held by the carrier and the envelope hold by the envelope holder.

According to an embodiment, the envelope holder comprises a holder part being configured for holding a first end of the envelope. For example, in an embodiment, where the envelope has an open end, the holder part may be configured for holding the open end of the envelope. According to a further embodiment, the carrier and the holder part are arranged and configured to move the deformable element into the internal space through the holder part. For example, the holder part may be configured to hold the open end of the envelope open. For example, according to an embodiment the holder part has an opening configured for allowing pass-through of the deformable element while the first end of the envelope may surround the opening of the holder part. For example, according to an embodiment the holder part comprises a sleeve. In accordance with an embodiment, the sleeve has an outer surface configured for receiving the first end of the envelope. Further, the sleeve may be configured so as to have an inner surface forming a through-hole for pass-through of the deformable element during the insertion movement.

Moving the deformable element through the holder part, which in turn holds the envelope, allows for a secure insertion of the deformable element into the internal space of the envelope without wrinkling of the envelope.

According to an embodiment, the envelope holder has a second part spaced apart from the holder part, the second part being configured for holding a second end of the envelope. For example, according to an embodiment, the envelope holder is configured for holding the envelope on two opposite ends thereof. This allows for an efficient design of the envelope holder and in particular for an easy adjustment of the envelope holder to a different length of envelopes. Further, in such a case due to the pressurized gas provided to the internal space of the envelope, the structural rigidity of the envelope may be increased by the pressurized gas. According to a further embodiment, guiding elements are provided between the holder part and the second part of the envelope holder.

In accordance with an embodiment, the second part of the envelope holder comprises the gas outlet. Hence, according to an embodiment, the gas outlet is located opposite the holder part through which the deformable element is inserted into the internal space. However, according to other embodiments, the gas outlet may be provided at the holder part of the envelope holder or at an even different location as long as the outlet is configured for providing pressurized gas to the internal space. However, providing the gas outlet at the second part or at the holder part of the envelope holder may reduce the number of parts necessary to build the enveloping device or may prevent a separate part extending into the enveloping device, which may potentially bear the risk of damaging the deformable element or the envelope.

According to a further embodiment, the second part of the envelope holder is a closing plug having an outer surface configured for receiving the second end of the envelope. This allows for easy and secure mounting of the envelope to the second part of the envelope holder. According to an embodiment, the closing plug is adapted for closing the second end of the envelope or at least providing a flow resistance for the pressurized gas in the internal space of the envelope.

According to an embodiment, the carrier and the envelope holder are configured to be movable with respect to each other into a loading position, which allows attachment of the deformable element to the carrier outside the internal space. For example, according to an embodiment, in the loading position the deformable element held by the carrier and the envelope held by the envelope holder are located spaced apart from each other. This may facilitate mounting of the deformable element to the carrier. Further, this may facilitate mounting of the envelope to the envelope holder.

According to an embodiment, the second part is be moveably mounted on a support provided for bearing the second part and aligning the second part (and hence the envelope) with the path of motion of the deformable element during the insertion movement. A good alignment between the deformable element and the envelope in the envelope holder reduces the risk of damage of the deformable element during insertion into the envelope.

According to an embodiment, in the loading position the carrier extends through the envelope holder. Such an embodiment may have a number of advantages. For example, this embodiment may allow for the deformable element to be pulled into the internal space of the envelope. Further, the carrier may have a bearing surface for bearing the second part of the envelope holder. For example the second part may be moveably mounted on the carrier. Hence the carrier forms the support for the second part. The carrier bearing the second part of the envelope holder may provide an alignment of the second part of the envelope holder and the deformable element.

According to an embodiment, the carrier is spatially fixed and the envelope holder is movable with regard to the carrier to perform the insertion movement. In other words, in such an embodiment the deformable element, held by the carrier, is spatially fixed and the envelope is moved over the deformable element by the envelope holder. Movement of the envelope has the advantage that simultaneously with the movement of the envelope over the deformable element the envelope can be conditioned by one or more spatially fixed conditioning devices. In this way the efficiency of manufacture of the deformable element with the conditioned envelope thereon may be increased.

If a near end of the deformable element, which faces the internal space, is attached to the carrier movement of the deformable element into the internal space corresponds to a pulling action, e.g. irrespective of whether the carrier extends through the envelope holder or not or of whether the carrier or the envelope holder is spatially fixed.

According to an embodiment, the deformable element is a fiber element comprising a plurality of fibers. According to an embodiment, the fiber element comprising a plurality of fibers and a plurality of cavities between the fibers. As long as the cavities are unfilled, the fibers of the fiber element has a limited movability with regard to each other thus providing some degree of deformability of the fiber element. After filling the cavities of the fibers with a filling medium, e.g. a polymer, a resin, etc., and hardening the filling medium, the movability of the fibers is reduced or completely removed thus resulting in an element having a high stiffness.

However, it should be understood that the deformable element is not limited to fiber elements. Rather, according to another, more general embodiment the deformable element is a deformable element which comprises a plurality of cavities. Hence, generally a deformable element having a plurality of cavities may be stiffened by filling the cavities with a suitable filling medium. In this regard, a fiber element having a plurality of cavities is only one example of a deformable element having a plurality of cavities.

According to an embodiment, the enveloping device comprises at least one actuator configured for performing the insertion movement. For example, the actuator may be configured for moving the envelope holder. According to another embodiment, the at least one actuator is configured for moving the carrier. According to a further embodiment, the at least one actuator is configured for moving a further element, for example a conditioning device, which is configured for conditioning the surface of the envelope. However, in an alternative embodiment, where the envelope holder is moved by the at least one actuator, such a conditioning device may have a fixed location and the conditioning of the surface is performed by moving the envelope past the conditioning device.

According to a further embodiment, the enveloping device comprises a valve for controlling the flow of pressurized gas to the internal space. For example, according to an embodiment, the valve is located between a source of pressurized gas and the gas outlet.

According to a further embodiment, a controller is provided for controlling the at least one actuator and/or the valve. The controller may comprise sub-controllers for controlling each of the at least one actuator and the valve. Further, according to an embodiment, the controller is configured for controlling only the at least one actuator. In another embodiment, the controller is configured for controlling only the valve. For example, in such an embodiment, the elements, which are not controlled by the controller, may be operated by hand.

According to an embodiment, the inner surface of the sleeve is a polished surface avoiding damage of the fibers. According to a further embodiment, the through-hole of the sleeve has a cross-sectional shape which conforms to the cross-sectional shape of the deformable element. Further, according to an embodiment, the cross-sectional area of the deformable element is smaller than the cross-sectional area of the through-hole. In other words, in accordance with an embodiment, the deformable element and the through-hole of the sleeve are adapted to each other such that the deformable element can be located in the through-hole with radial play. This may help to treat the deformable element with care during the insertion movement. Treatment with care may be in particular advantageous for deformable elements in the form of fiber elements.

In accordance with an embodiment, during the insertion movement the internal space is an empty space which is gradually occupied with the deformable element as the insertion movement proceeds.

According to an embodiment, the insertion movement comprises pulling the deformable element into the envelope. As noted above, the end of the deformable element which faces the internal space may be denoted as "near end". Pulling may be performed e.g. by pulling the near of the deformable element into the internal space. However, "pulling the near end of the deformable element does not exclude pulling action on the other parts of the deformable element. Rather, the deformable element may e.g. be attached to the carrier over its full length.

According to embodiments of the third aspect, the conditioning device is adapted for providing the functionality of one or more of the above-mentioned embodiments and/ or for providing the functionality as required by one or more of the above-mentioned embodiments, in particular of the embodiments of the first aspect and the second aspect. By providing the pressurized gas to the internal space of the envelope, the deformable element may be protected from damage due to the insertion movement. Further, structural rigidity of the envelope can be increased by pressurizing the internal space. Further, in accordance with embodiments of the herein disclosed subject-matter no further tools for holding open the internal space are necessary.

According to the invention , a computer program according to claim 12 is provided, the computer program being configured for, when being executed by a data-processing device, controlling the method as set forth in the first aspect of the invention or an embodiment thereof.

According to the invention , a computer program is provided, the computer program being configured for, when being executed by a data-processing device, controlling the method as set forth in the second aspect of the invention or an embodiment thereof.

According to an embodiment, the controller of the herein disclosed subject matter is at least in part realized by the data processing device and the functionality of the controller as disclosed herein is at least partially provided by the computer program running on the processing device.

As used herein, reference to a computer program is intended to be equivalent to a reference to a program element and/or a computer-readable medium containing instructions for controlling a data-processing device to effect and/or coordinate the performance of the method and its embodiments as described herein.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

In the above, there have been described and in the following there will be described exemplary embodiments of the subject-matter disclosed herein with reference to an conditioning device and a respective method. It has to be pointed out that of course any combination of features relating to different aspects of the herein disclosed subject-matter is also possible. In particular, some embodiments have been or will be described with reference to apparatus-type features, whereas other embodiments have been or will be described with reference to method-type features. However, a person skilled in the art will gather from the above and the following description that, unless otherwise notified, in addition to any combination of features belonging to one aspect also any combination between features relating to different aspects of embodiments, for example even between features of the apparatus-type embodiments and features of the method-type embodiments is considered to be disclosed with this application.

It is noted that according to an embodiment any device or method disclosed herein is configured for use in the manufacture of structural elements (i.e. constructional elements) from a deformable element.

The aspects and embodiments defined above and further aspects and embodiments of the present invention are apparent from the examples to be described hereinafter and are explained with reference to the drawings, but to which the invention is not limited.

### BRIEF DESCRIPTION OF THE DRAWINGS

Fig. 1 shows an enveloping device with a conditioning device in accordance with embodiments of the herein disclosed subject matter.
Fig. 2 shows a conditioning device in accordance with embodiments of the herein disclosed subject-matter.
Fig. 3 shows the conditioning device of Fig. 2 in a parking position.
Fig. 4 shows a cross-sectional view of a deformable element placed in an envelope according to embodiments of the herein disclosed subject matter.

### DETAILED DESCRIPTION

The illustration in the drawings is schematic. It is noted that in different figures, similar or identical elements are provided with the same reference signs or with reference signs, which are different from the corresponding reference signs only within the first digit.

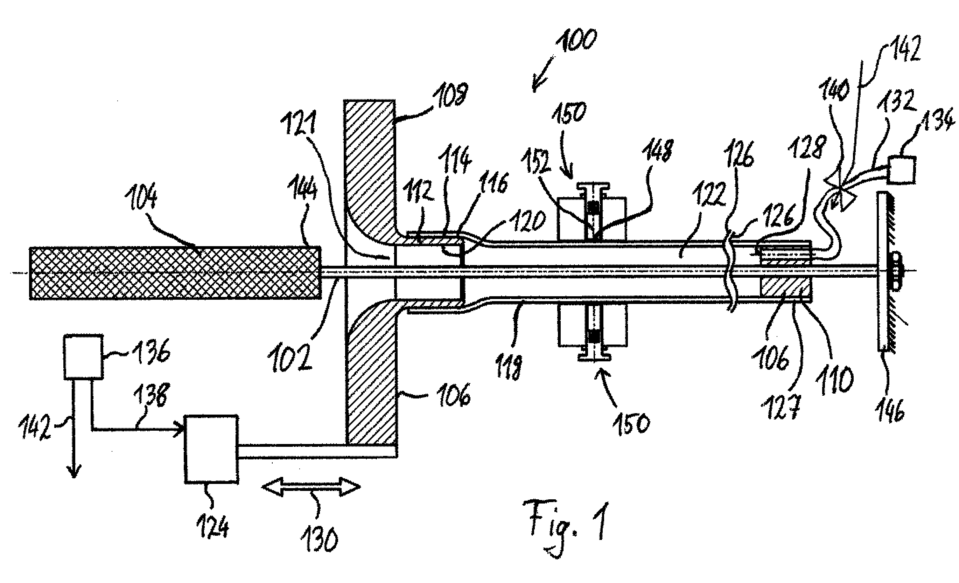

Fig. 1 shows an enveloping device 100 with a conditioning device 150 in accordance with embodiments of the herein disclosed subject matter.

The enveloping device 100 comprises a carrier 102 for receiving a deformable element 104. In accordance with an embodiment of the herein disclosed subject-matter, the carrier 102 is fixed in space. Accordingly, also the deformable element 104 held by the carrier 102 is fixed in space. In accordance with an embodiment, the deformable element 104 is a fiber element comprising a plurality of fibers and a plurality of cavities between the fibers.

The enveloping device 100 further comprises an envelope holder 106 comprising a holder part 108 and a second part 110. The second part 110 is spaced apart from the holder part 108.

In accordance with an embodiment, the holder part 108 comprises a sleeve 112, the sleeve 112 having an outer surface 114 configured for receiving the first end 116 of an envelope 118. The sleeve has an inner surface 120, which forms a through-hole 121 for pass-through of the deformable element 104 during an insertion movement in which the deformable element 104 is inserted into an internal space 122 of the envelope 118. The internal space 122 is configured for receiving the deformable element 104. In accordance with an embodiment, the holder part 108 is movable with regard to the deformable element. To this end, an actuator 124 is provided, which is mechanically coupled to the holder part 108 to thereby move the holder part 108 with regard to the deformable element 104. The actuator 124 may be for example an electrical actuator, a hydraulic actuator, etc. According to an embodiment, a cross-sectional shape of the through-hole 121 conforms to a cross-sectional shape of the deformable element. For example, the cross-sectional shape of both the through-hole 121 and the deformable element 104 is a circular shape. According to an embodiment, the diameter of the deformable element 104 is smaller than the diameter of the through-hole 121.

According to an embodiment, the envelope 118 is mounted to the envelope holder 106 in a loading position shown in Fig. 1, in which the deformable element 104 is located outside the internal space 122 of the envelope 118. It is noted that in Fig. 1 the envelope 118 is not shown in its full length, indicated by the lines 126. The second part 110 is configured for holding a second end 127 of the envelope 118.

Starting from the loading position, by movement of the holder part 108 towards the deformable element 104 and over the deformable element 104, i.e. towards the left in Fig. 1, the deformable element is placed in the internal space 122 of the envelope 118.

In accordance with embodiments of the herein disclosed subject-matter, pressurized gas such as pressurized air is provided to the internal space 122 of the envelope 118 during the insertion movement of the deformable element 104 into the internal space 122. The pressurized gas is provided by a gas outlet 128. In accordance with an embodiment, the gas outlet 128 is located in the second part, which may be formed by a closing plug as shown in Fig. 1. According to another embodiment (not shown in Fig. 1), the gas outlet is located in the sleeve 112. The pressurized gas flows out of the envelope through the first end 116 of the envelope 118 through which the deformable element 104 is inserted into the internal space 122 of the envelope 118. By this configuration, providing pressurized gas to the internal space 122 of the envelope 118 on the one hand and maintaining the end 116 through which the deformable element 104 is inserted into the internal space 122 open, an gas flow from the internal space 122 towards the deformable element 104 and out of the envelope 118 is generated. This gas flow allows the placement of the deformable element 104 in the internal space 122 of the envelope without damaging the deformable element. This is in particular advantageous in cases, where the deformable element is a fiber element comprising a plurality of fibers. For example, the deformable element can be a fiber element as disclosed in AT 5081120 B1 and WO 2010/129975 A2. The fibers may be natural fibers or artificial fibers and may be made of e.g. made of glass, carbon, aramide, basalt, hemp, flax, cotton or mixtures thereof, just to name some examples. The deformable element may be provided in the shape of a tube and may be a knitted or woven element. Further, the envelope may be a flexible tube as disclosed in AT 5081120 B1 and WO 2010/129975 A2. For example, the envelope may be of rubber, plastic, polymer, polyvinylchloride, polyethylene, polyamide, polyurethane, silicone, polytetrafluorethylene, etc. The devices and methods as disclosed herein may be used for placement of a flexible tube (envelope) over a tubular woven fabric (deformable element) as disclosed in these documents.

In order to provide for the movability of the envelope holder 106 and in particular of the second part 110 of the envelope holder, the second part of the envelope holder is movable with regard to the carrier 102. Hence the second part 110 is moveable with regard to the deformable element 104 held by the carrier 102. According to an embodiment, the second part 110 is not actively driven by an actuator. Rather, according to an embodiment, the second part 110 is freely movable in axial direction 130, i.e. in the direction of the insertion movement. In this case, the second part 110 is pulled by the holder part 108 via the envelope 118. To provide movability of the second part 110, a flexible gas hose 132 is provided, which connects the gas outlet 128 with a gas pressurized gas reservoir 134.

According to other embodiments, the holder part and the second part may be mechanically connected to maintain the holder part and the second part at a distance suitable for holding the envelope.

In accordance with an embodiment, a controller 136 is provided for controlling the actuator 124 by control signals 138 in order to perform the insertion movement of the deformable element 104 into the internal space 122 of the envelope 118. In order to control the flow of pressurized gas into the internal space 122, a valve 140 is provided, the valve 140 also being controlled by the controller 136 via control signals 142.

Alternatively to the embodiments shown in Fig. 1, the gas outlet may be provided in the holder part 108. For example, according to an embodiment, the gas outlet may be provided in the sleeve 112. Further, while in Fig. 1 the carrier 102 extends through the envelope holder 106 in the loading position of the enveloping device 100, in other embodiments the carrier may extend to the opposite side such that the carrier is not fed through the second part 110 of the envelope holder.

Irrespective, which carrier configuration is implemented, it has been found advantageous to pull the deformable element into the internal space 122 of the envelope 118. This can be accomplished with any carrier configuration as long as the near end 144 of the deformable element 104, which faces the first end 116 of the envelope 118 is attached to the carrier 102. In this regard it is mentioned that the wording "near end 144 facing the first end 116 of the envelope 118", is considered effectively equivalent to the wording "near end 144 facing (in the loading position, before the deformable element is moved into the internal space) the holder part 108 through which the deformable element is moved into the internal space 122".

As mentioned above, according to an embodiment, the carrier 102 is fixed in space, e.g. by mounting the carrier 102 to a base 146. It should be understood that also the actuator 124 might be mounted to the same base 146 or may be at least mechanically connected thereto so as to fix the base 146 and the actuator 124 relative to each other. In alternative embodiments (not shown in Fig. 1), the carrier may be coupled to and moved by the actuator 124 for performing the insertion movement. In such a case the envelope holder 106 and the actuator 124 may be fixed with respect to a common base (not shown in Fig. 1).

According to an embodiment, a tool 148 for conditioning the envelope is provided. For example, according to an embodiment the tool is configured for generating a predetermined breaking line in the envelope 118 held by the envelope holder 106. In accordance with an embodiment, the tool 148 is part of the conditioning device 150 for conditioning the envelope 118 of the deformable element 104. In accordance with an embodiment, the conditioning device 150 comprises a depth adjustment device 152 configured for maintaining a predetermined depth up to which the tool 148 works on the envelope 118, wherein the predetermined depth is less than the wall thickness of the envelope 118. In accordance with an embodiment, the enveloping device 100 comprises two conditioning devices 150, as shown in Fig. 1. According to other embodiments, only a single conditioning device 150 or three or more conditioning devices 150 may be provided.

In accordance with an embodiment, the two or more conditioning devices 150 are distributed over the circumference of the envelope 118. According to an embodiment, the two or more conditioning devices 150 are uniformly distributed over the circumference of the envelope 118. For example, if two conditioning devices 150 are provided, these conditioning devices are located diametrically opposite each other with regard to the envelope 118.

According to an embodiment, after filling the plurality of cavities in the deformable element 104, the envelope 118 is removed from the deformable element 104 by separating the envelope 118 along the predetermined breaking line (not shown in Fig. 1).

While only a single enveloping device is shown in Fig. 1 it should be understood that according to other embodiments two, three or even more enveloping devices may be provided and operated simultaneously. For example, a single actuator may be provided for operating two or more enveloping devices.

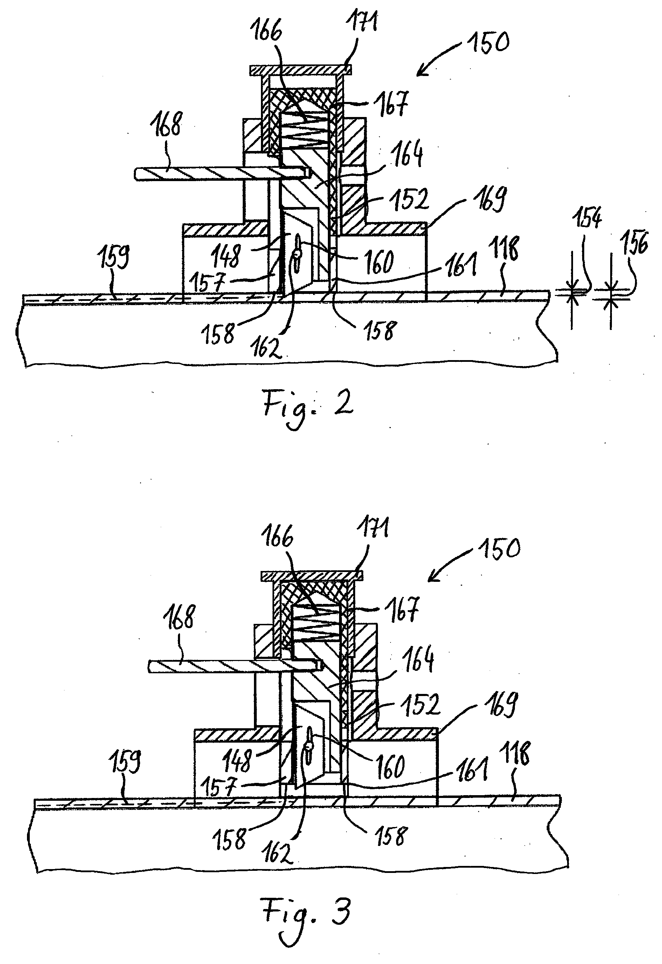

Fig. 2 shows a conditioning device 150 in accordance with embodiments of the herein disclosed subject-matter.

In particular, the conditioning device 150 shown in Fig. 2 comprises a tool 148 in the form of a blade and a depth adjustment device 152, which is configured for maintaining a predetermined depth 154 up to which the tool 148 works on an envelope 118, wherein the predetermined depth 154 is less than the wall thickness 156 of the envelope 118. In accordance with an embodiment, the depth adjustment device 152 comprises a slider 157 having a sliding surface 158 configured for sliding over the envelope 118 during movement of the tool 148 and the envelope 118 relative to each other.

According to an embodiment, the tool 148 protrudes over the sliding surface 158 towards the envelope 118 by a predetermined length corresponding to the predetermined depth 154. By sliding the slider 157 on and relative to the envelope 118 generates a predetermined breaking line 159 according to embodiments of the herein disclosed subject matter. The predetermined breaking line 159 facilitates removal of the envelope from the deformable element (not shown in Fig. 2) after processing the deformable element in the envelope 118.

According to an embodiment, the depth adjustment device 152 further comprises an adjustment mechanism connected to the tool and the slider, wherein a relative position between the tool and the slider is adjustable to thereby adjust the predetermined depth, by which the tool 148 protrudes over the sliding surface 158. The adjustment mechanism may comprise for example an elongated hole 160 in the tool 148 and an attachment element 162, e.g. a screw, which is moveable in the elongated hole 160. Attachment element 162 is mounted to the slider 157 and hence the tool 148 is movable with regard to the slider 157 due to the elongated hole 160. By moving the tool 148 with regard to the slider 157, the predetermined depth 154 is adjustable. Further, in accordance with an embodiment the tool 148 is attachable to the slider 157 by attachment element 162.

The conditioning device 150 further comprises a bias element 166, e.g. a spring, which extends between a housing 167 and a counter element 164 of the slider. The counter element 164 is slidably mounted in the housing 167 and has attached thereto a sliding element 161 which provides the sliding surface 158. The housing 167 is mounted to a guiding block 169 which guides the envelope 118 through the conditioning device. Hence, the bias element 166 biases the slider 157 against the envelope 118. Since the tool 148 is attached to the slider 157, also the tool 148 is biased against the envelope 118.

According to an embodiment, the housing is 167 of depth adjustment device 152 is not directly mounted to guiding block 169 but rather via coarse positioning element 171. By coarse positioning element 171 the position of depth adjustment device 152 with regard to guiding block 169 is adjustable, e.g. by means of a thread, thereby enabling positioning of the depth adjustment device 152 and hence of the tool close to the envelope 118. Fine adjustment of the tool 148 is then performed by depth adjustment device and in particular by bias element 166 and slider 157 as described above.

Fig. 2 shows the conditioning device 150 in an operating position in which the slider 157 contacts the envelope 118.

Fig. 3 shows the conditioning device 150 of Fig. 2 in a parking position in which the tool is retracted from an operating position. Accordingly, in the parking position the slider 157 and also the tool 148 are spaced from the envelope 118. This may facilitate mounting (e.g. pulling through) of the envelope 118 through the guiding block 169.

In accordance with an embodiment, an actuator (not shown in Fig. 3) is provided for moving the tool 148 and the envelope 118 relative to each other to thereby generate the predetermined breaking line 159 in the envelope over an axial length, which is larger than the axial dimension of the tool 148. In accordance with an embodiment, the actuator to accomplish this task is the actuator 124 as described with regard to Fig. 1, which according to an embodiment is configured for moving the envelope 118 with regard to the base 146. Hence, if the conditioning device 150 is spatially fixed and the envelope 118 is moved by means of the envelope holder 106, the relative movement between the tool 148 and the envelope 118 is realized. Hence, as shown in Fig. 1, in an embodiment the actuator 124 is configured for performing simultaneously both the movement of the tool 148 and the envelope holder 106 relative to each other as well as the insertion movement of the deformable element 104 into the envelope 118.

According to another embodiment not shown in the drawings, a dedicated actuator is provided for moving the tool 148 and the envelope 118 relative to each other. According to another embodiment, separate actuators are provided for performing the insertion movement and the movement of the tool 148 and the envelope relative to each other. Moreover, according to an embodiment the conditioning of the envelope is performed at a different location and/or independent from the insertion movement. In this regard it is noted that according to an embodiment, the envelope holder (e.g. the envelope holder 106 of Fig. 1) and the actuator (e.g. the actuator 124 of Fig. 1) may be provided as a part of a stand-alone conditioning device comprising only the features/element which are necessary to perform the conditioning of the envelope 118. In such a case e.g. the carrier 102 and related elements (e.g. the deformable element 104) may be omitted.

It should be understood that instead of a blade, the tool 148 may be any other tool which generates the predetermined breaking line e.g. mechanically, thermally or electrically. For example, in another embodiment, the tool may comprise a laser for laser cutting the envelope up to the predetermined depth, thereby generating the predetermined breaking line. Moreover, it should be understood that the determined breaking line may be continuous, as is the case for the tool 148 and its operation described with regard to Fig. 2. However, according to other embodiments, the predetermined breaking line may be a discontinuous line. For example, with a rotating element having a plurality of blade sections or with a laser a predetermined breaking line can be produced which consists of a plurality of spaced apart sections.

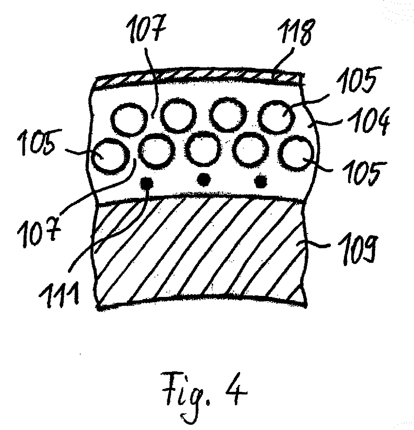

Fig. 4 shows a cross-sectional view of a deformable element 104 placed in an envelope 118 according to embodiments of the herein disclosed subject matter.

In accordance with an embodiment, the deformable element 104 comprises a plurality of fibers, some of which are denoted by 105. The cavities (spaces) between the fibers 105 are denoted by 107 and are not drawn to scale. According to an embodiment, a core element 109 is located inside the deformable element 104. Hence, in this embodiment the deformable element is sandwiched between the envelope 118 and the core element 109. For assisting the filling of the filling medium in the cavities 107, a flow promoter 111 may be provided. Filling can be performed through the space between the envelope 118 and the core 109. According to an embodiment, the envelope 118 and the core 109 are gastight. It should be understood that in Fig. 4 the dimensions of the individual elements and the spacings between the elements are not drawn to scale but may be exaggerated for the purpose ease of understanding. In particular the spacings (e.g. between the envelope 118 and the fibers 105) may be reduced or even be zero.

According to embodiments of the invention, any suitable control-related entity disclosed herein, e.g. the controller 136, is at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware. According to an embodiment, the controller 136 comprises a processor device including at least one processor for carrying out at least one computer program corresponding to a respective software module.

It should be noted that any structural entity disclosed herein (e.g. components, units, elements and devices, e.g. the envelope holder or the carrier) are not limited to a dedicated entity as described in some embodiments. Rather, the herein disclosed subject matter may be implemented in various ways and with various granularity on device level while still providing the desired functionality. Further, it should be noted that according to embodiments a separate entity may be provided for each of the functions disclosed herein. According to other embodiments, an entity is configured for providing two or more functions as disclosed herein.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
Described is a method of conditioning an envelope 118 of a deformable element. The method comprises generating a predetermined breaking line 159 in an envelope 118, wherein generating the predetermined breaking line 159 comprises working on the envelope 118 up to a predetermined depth 154 which is less than the wall thickness of the envelope 118.

### List of reference signs:

- 100: conditioning device
- 102: carrier
- 104: deformable element
- 105: fiber
- 106: envelope holder
- 107: cavity in 104
- 108: holder part
- 109: core element
- 110: second part
- 111: flow promoter
- 112: sleeve
- 114: outer surface
- 116: first end of 118
- 118: envelope
- 120: inner surface of 112
- 121: through-hole in 106
- 122: internal space of 118
- 124: actuator
- 126: lines indicating interrupt in drawing
- 127: second end of 118
- 128: gas outlet
- 130: axial direction
- 132: gas hose
- 134: reservoir for pressurized gas
- 136: controller
- 138: control signals to 124
- 140: valve
- 142: control signals to 140
- 144: near end of 104
- 146: base
- 148: tool for generating a predetermined breaking line
- 150: conditioning device
- 152: adjustment device
- 154: predetermined depth
- 156: wall thickness of 118
- 157: slider
- 158: sliding surface
- 159: predetermined breaking line
- 160: elongated hole
- 161: sliding element
- 162: attachment element
- 164: counter element
- 166: bias element
- 167: housing
- 169: guiding block
- 171: coarse positioning element

## Claims

1. Method of conditioning an envelope (118) of a deformable element (104), the method comprising:
generating a predetermined breaking line (159) in the envelope (118);
wherein generating the predetermined breaking line (159) comprises working on the envelope (118) up to a predetermined depth (154) which is less than the wall thickness (156) of the envelope (118);
wherein generating the predetermined breaking line (159) comprises providing a tool (148) for working on the envelope (118) and moving the tool (148) and the envelope (118) relative to each other in order to provide the predetermined breaking line (159);
the method further comprising coordinating an insertion movement of the deformable element (104) into the envelope (118) with the movement of the tool (148) and the envelope (118) relative to each other.

2. Method according to any one of the preceding claims, further comprising:
pressurizing an internal space (122) of the envelope (118) during the generation of the predetermined breaking line (159).

3. Method according to any one of the preceding claims, predetermined breaking line (159)predetermined breaking line (159)further comprising:
generating a at least one further predetermined breaking line which is spaced from the predetermined breaking line (159).

4. Method according to any one of the preceding claims, wherein
working the envelope (118) up to a predetermined depth (154) comprises cutting into the envelope (118) up to a predetermined depth (154).

5. Method of production of a structural element from a deformable element (104), the method comprising:
conditioning an envelope (118) of the deformable element (104) according to any one of the preceding claims;
subsequently shaping the deformable element (104) together with the envelope (118) located on the deformable element (104);
optionally, the deformable element (104) comprises a plurality of cavities (107) and the method further comprises filling the cavities (107) with a curable medium after shaping the deformable element (104);
optionally subsequently curing the curable medium in the cavities (107) of the deformable element (104), thereby reducing deformability of the deformable element.

6. Conditioning device comprising:
an envelope holder (106) configured for holding an envelope (118);
a tool (148) for generating a predetermined breaking line (159) in the envelope (118) held by the envelope holder (106);
a depth adjustment device (152) configured for maintaining a predetermined depth (154) up to which the tool (148) works on the envelope (118), wherein the predetermined depth (154) is less than a wall thickness (156) of the envelope (118);
an actuator (124) configured for moving the tool (148) and the envelope holder (106) relative to each other to thereby generate the predetermined breaking line (159) in the envelope (118) over a axial length which is larger than the axial dimension of the tool (148),
wherein the actuator (124) is further configured for performing simultaneously both the movement of the tool (148) and the envelope holder (106) relative to each other as well as an insertion movement of a deformable element (104) into the envelope (118).

7. Conditioning device according to claim 6, further comprising a bias element (166) biasing the tool (148) against the envelope (118).

8. Conditioning device according to any one of claims 6 or 7, the depth adjustment device (152) further comprising:
a slider (157) having a sliding surface (158) configured for sliding over the envelope (118) during movement of the tool (148) and the envelope holder (106) relative to each other, wherein optionally the tool (148) protrudes over the sliding surface (158) towards the envelope (118) by a predetermined length corresponding to the predetermined depth (154).

9. Conditioning device according to the preceding claim, wherein the depth adjustment device (152) further comprises:
an adjustment mechanism (160, 162) connecting the tool (148) and the slider (157) wherein a relative position between the tool (148) and the slider (157) is adjustable to thereby adjust the predetermined length by which the tool (148) protrudes over the sliding surface (158).

10. Conditioning device according to any one of claims 6 to 9, wherein
the tool (148) is configured to be moveable into an operating position in which the tool (148) is positioned for generating the predetermined breaking line (159); and
the tool (148) is configured to be moveable into an parking position in which the tool (148) is retracted from the operating position.

11. Conditioning device according to any one of claims 6 to 10, further comprising a gas outlet (128) configured for providing pressurized gas to the internal space (122) of the envelope (118) during the generation of the predetermined breaking line (159).

12. A computer program, the computer program being configured for, when being executed by a data processing device (136), controlling the method as set forth in any one of the claims 1 to 5.

## Patentansprüche

1. Verfahren zum Aufbereiten einer Umhüllung (118) eines deformierbaren Elements (104), wobei das Verfahren aufweist:
Erzeugen einer vorbestimmten Bruchlinie (159) in der Umhüllung (118);
wobei das Erzeugen der vorbestimmten Bruchlinie (159) ein Bearbeiten der Umhüllung (118) bis zu einer vorbestimmten Tiefe (154) aufweist, die geringer ist als die Wandstärke (156) der Umhüllung (118);
wobei das Erzeugen der vorbestimmten Bruchlinie (159) aufweist ein Bereitstellen eines Werkzeugs (148) zum Bearbeiten der Umhüllung (118) und ein Bewegen des Werkzeugs (148) und der Umhüllung (118) relativ zu einander, um die vorbestimmte Bruchlinie (159) bereitzustellen;
wobei das Verfahren ferner aufweist ein Koordinieren einer Einführbewegung des deformierbaren Elements (104) in die Umhüllung (118) hinein mit der Bewegung des Werkzeugs (148) und der Umhüllung (118) relativ zu einander.

2. Verfahren gemäß einem beliebigen der vorangehenden Ansprüche, ferner aufweisend:
Beaufschlagen mit Druck eines Innenraums (122) der Umhüllung (118) während des Erzeugens der vorbestimmten Bruchlinie (159).

3. Verfahren gemäß einem beliebigen der vorangehenden Ansprüche, wobei die vorbestimmte Bruchlinie (159) ferner aufweist:
Erzeugen zumindest einer weiteren vorbestimmten Bruchlinie, die von der vorbestimmten Bruchlinie (159) beabstandet ist.

4. Verfahren gemäß einem beliebigen der vorangehenden Ansprüche, wobei das Bearbeiten der Umhüllung (118) bis zu einer vorbestimmten Tiefe (154) ein Schneiden in die Umhüllung (118) hinein bis zu einer vorbestimmten Tiefe (154) aufweist.

5. Verfahren zum
Erzeugen eines strukturellen Elements von einem deformierbaren Element (104) wobei das Verfahren aufweist:
Aufbereiten einer Umhüllung (118) des deformierbaren Elements (104) gemäß einem beliebigen der vorangehenden Ansprüche;
anschließend Formgeben des deformierbaren Elements (104) zusammen mit der Umhüllung (118), welche auf dem deformierbaren Element (104) angeordnet ist;
wobei das deformierbare Element (104) optional eine Mehrzahl von Kavitäten (107) aufweist und wobei
das Verfahren ferner aufweist ein Füllen der Kavitäten (107) mit einem aushärtbaren Medium nach dem Formgeben des deformierbaren Elements (104);
optionales anschließendes Aushärten des aushärtbaren Mediums in den Kavitäten (107) des deformierbaren Elements (104), damit eine Deformierbarkeit des deformierbaren Elementes reduziert wird.

6. Aufbereitungsvorrichtung, welche aufweist:
einen Umhüllungshalter (106), welcher konfiguriert ist zum Halten einer Umhüllung (118);
ein Werkzeug (148) zum Erzeugen einer vorbestimmten Bruchlinie (159) in der Umhüllung (118), welche mittels des Umhüllungshalters (106) gehalten ist;
eine Tiefeneinstellvorrichtung (152), welche konfiguriert ist zum Beibehalten einer vorbestimmten Tiefe (154) bis zu der das Werkzeug (148) die Umhüllung (118) bearbeitet, wobei
die vorbestimmte Tiefe (154) geringer ist als eine Wandstärke (156) der Umhüllung (118);
einen Aktuator (124), welcher konfiguriert ist zum Bewegen des Werkzeugs (148) und des Umhüllungshalters (106) relativ zueinander, um damit die vorbestimmte Bruchlinie (159) in der Umhüllung (118) über eine axiale Länge zu erzeugen, die länger ist als die axiale Ausdehnung des Werkzeugs (148),
wobei der Aktuator (124) ferner konfiguriert ist zum gleichzeitigen Durchführen beider Bewegungen des Werkzeugs (148) und des Umhüllungshalters (106) relativ zueinander genauso wie eine Einführbewegung eines deformierbaren Elements (104) in die Umhüllung (118) hinein.

7. Aufbereitungsvorrichtung gemäß Anspruch 6, ferner aufweisend ein Vorspannelement (166) zum Vorspannen des Werkzeugs (148) gegen die Umhüllung (118).

8. Aufbereitungsvorrichtung gemäß einem beliebigen der Ansprüche 6 oder 7, wobei
die Tiefeneinstellvorrichtung (152) ferner aufweist:
einen Gleiter (157), welcher eine Gleitoberfläche (159) hat, welche konfiguriert ist zum Gleiten über die Umhüllung (118) hinweg während einer Bewegung des Werkzeugs (148) und des Umhüllungshalters (106) relativ zueinander, wobei das Werkzeug (148) optional über die Gleitoberfläche (158) in Richtung der Umhüllung (118) um eine vorbestimmte Länge heraussteht, welche zu der vorbestimmten Tiefe (154) korrespondiert.

9. Aufbereitungsvorrichtung gemäß einem vorangehenden Anspruch, wobei die Tiefeneinstellvorrichtung (152) ferner aufweist:
einen Einstellmechanismus (160, 162), welcher mit dem Werkzeug (148) und den Gleiter (157) verbunden ist, wobei
eine relative Position zwischen dem Werkzeug (148) und dem Gleiter (157) einstellbar ist, um damit die vorbestimmte Länge einzustellen, um die das Werkzeug (148) über die Gleitoberfläche (158) hervorsteht.

10. Aufbereitungsvorrichtung gemäß einem beliebigen der Ansprüche 6 bis 9, wobei
das Werkzeug (148) konfiguriert ist in eine Betriebsposition bewegbar zu sein, in der das Werkzeug (148) positioniert ist die vorbestimmte Bruchlinie (159) zu erzeugen; und
das Werkzeug (148) konfiguriert ist in eine Parkposition bewegbar zu sein, in der das Werkzeug (148) von der Betriebsposition zurückgezogen ist.

11. Aufbereitungsvorrichtung gemäß einem beliebigen der Ansprüche 6 bis 10, ferner aufweisend einen Gasauslass (128), welcher konfiguriert ist ein druckbeaufschlagtes Gas in dem Innenraum (122) der Umhüllung (118) bereitzustellen während des Erzeugens der vorbestimmten Bruchlinie (159).

12. Ein Computerprogramm, wobei das Computerprogramm konfiguriert ist zum, wenn es mittels eiher Datenverarbeitungsvorrichtung (136) durchgeführt wird, Steuern des Verfahrens gemäß einem beliebigen der Ansprüche 1 bis 5.

## Revendications

1. Procédé de conditionnement d'une enveloppe (118) d'un élément déformable (104), le procédé comprenant :
la génération d'une ligne de rupture prédéterminée (159) dans l'enveloppe (118) ;
dans lequel la génération de la ligne de rupture prédéterminée (159) comprend un travail sur l'enveloppe (118) jusqu'à une profondeur prédéterminée (154) qui est inférieure à l'épaisseur de paroi (156) de l'enveloppe (118) ;
dans lequel la génération de la ligne de rupture prédéterminée (159) comprend la fourniture d'un outil (148) pour le travail sur l'enveloppe (118) et le déplacement de l'outil (148) et de l'enveloppe (118) l'un par rapport à l'autre afin de fournir la ligne de rupture prédéterminée (159) ;
le procédé comprenant en outre la coordination d'un mouvement d'insertion de l'élément déformable (104) à l'intérieur de l'enveloppe (118) avec le déplacement de l'outil (148) et de l'enveloppe (118) l'un par rapport à l'autre.

2. Procédé selon l'une quelconque des revendications précédentes, comprenant en outre :
la mise sous pression d'un espace interne (122) de l'enveloppe (118) pendant la génération de la ligne de rupture prédéterminée (159).

3. Procédé selon l'une quelconque des revendications précédentes, ligne de rupture prédéterminée (159) ligne de rupture prédéterminée (159) comprenant en outre :
la génération d'au moins une autre ligne de rupture prédéterminée qui est espacée de la ligne de rupture prédéterminée (159).

4. Procédé selon l'une quelconque des revendications précédentes, dans lequel
le travail de l'enveloppe (118) jusqu'à une profondeur prédéterminée (154) comprend une découpe à l'intérieur de l'enveloppe (118) jusqu'à une profondeur prédéterminée (154).

5. Procédé de production d'un élément structural à partir d'un élément déformable (104), le procédé comprenant :
le conditionnement d'une enveloppe (118) de l'élément déformable (104) selon l'une quelconque des revendications précédentes ;
puis la mise en forme de l'élément déformable (104) conjointement avec l'enveloppe (118) située sur l'élément déformable (104) ;
éventuellement, l'élément déformable (104) comprend une pluralité de cavités (107) et le procédé comprend en outre le remplissage des cavités (107) d'un milieu durcissant après la mise en forme de l'élément déformable (104) ;
puis éventuellement le durcissement du milieu durcissant dans les cavités (107) de l'élément déformable (104), réduisant ainsi la déformabilité de l'élément déformable.

6. Dispositif de conditionnement comprenant :
un porte-enveloppe (106) configuré pour porter une enveloppe (118) ;
un outil (148) permettant la génération d'une ligne de rupture prédéterminée (159) dans l'enveloppe (118) portée par le porte-enveloppe (106) ;
un dispositif de réglage de profondeur (152) configuré pour maintenir une profondeur prédéterminée (154) jusqu'à laquelle l'outil (148) travaille sur l'enveloppe (118), dans lequel la profondeur prédéterminée (154) est inférieure à une épaisseur de paroi (156) de l'enveloppe (118) ;
un actionneur (124) configuré pour déplacer l'outil (148) et le porte-enveloppe (106) l'un par rapport à l'autre pour ainsi générer la ligne de rupture prédéterminée (159) dans l'enveloppe (118) sur une longueur axiale qui est supérieure à la dimension axiale de l'outil (148),
dans lequel l'actionneur (124) est configuré en outre pour réaliser simultanément à la fois le déplacement de l'outil (148) et du porte-enveloppe (106) l'un par rapport à l'autre ainsi qu'un mouvement d'insertion d'un élément déformable (104) à l'intérieur de l'enveloppe (118).

7. Dispositif de conditionnement selon la revendication 6, comprenant en outre un élément de sollicitation (166) sollicitant l'outil (148) à l'encontre de l'enveloppe (118).

8. Dispositif de conditionnement selon l'une quelconque des revendications 6 ou 7, le dispositif de réglage de profondeur (152) comprenant en outre :
un coulisseau (157) présentant une surface de coulissement (158) configurée pour coulisser au-dessus de l'enveloppe (118) pendant le mouvement de l'outil (148) et du porte-enveloppe (106) l'un par rapport à l'autre, dans lequel l'outil (148) fait éventuellement saillie au-dessus de la surface de coulissement (158) en direction de l'enveloppe (118) à une longueur prédéterminée correspondant à la profondeur prédéterminée (154).

9. Dispositif de conditionnement selon l'une quelconque des revendications précédentes, dans lequel le dispositif de réglage de profondeur (152) comprend en outre :
un mécanisme de réglage (160, 162) raccordant l'outil (148) et le coulisseau (157), dans lequel une position relative entre l'outil (148) et le coulisseau (157) peut être réglée pour ainsi régler la longueur prédéterminée de laquelle l'outil (148) fait saillie au-dessus de la surface de coulissement (158).

10. Dispositif de conditionnement selon l'une quelconque des revendications 6 à 9, dans lequel
l'outil (148) est configuré pour pouvoir être déplacé dans une position de fonctionnement dans laquelle l'outil (148) est positionné pour générer la ligne de rupture prédéterminée (159) ; et
l'outil (148) est configuré pour pouvoir être déplacé dans une position de stationnement dans laquelle l'outil (148) est retiré de la position de fonctionnement.

11. Dispositif de conditionnement selon l'une quelconque des revendications 6 à 10, comprenant en outre une sortie de gaz (128) configurée pour fournir un gaz sous pression à l'espace interne (122) de l'enveloppe (118) pendant la génération de la ligne de rupture prédéterminée (159).

12. Programme informatique, le programme informatique étant configuré, lorsqu'il est exécuté par un dispositif de traitement de données (136), pour commander le procédé tel qu'il est exposé selon l'une quelconque des revendications 1 à 5.
